# EUROPEAN PATENT APPLICATION

(11) **EP 3 327 323 A1**
(43) Date of publication of application: **30.05.2018**
(21) Application number: 16827775.4
(22) Date of filing: 19.07.2016
(51) Int. Cl.: F16J 15/34, F04D 13/08, F04D 29/12, F04D 29/70

(54) **SHAFT-SEALING DEVICE AND SUBMERSIBLE PUMP**

(30) Priority: 23.07.2015 JP 2015145932
(71) Applicant: Eagle Industry Co., Ltd., Minato-ku Tokyo 105-8587 (JP)
(72) Inventor: MARUYAMA, Hideki, Tokyo 105-8587 (JP); INOUE, Hideyuki, Tokyo 105-8587 (JP); TANI, Kimihiro, Tokyo 105-8587 (JP)
(74) Representative: Schlief, Thomas P.
(86) International application number: PCT/JP2016/071127
(87) International publication number: WO 2017/014215

(57) **Abstract**

[Problem]

To provide a shaft-sealing device and a submersible pump with which the configuration can be made simple and the device can be made smaller, and which can be used without maintenance for a long period of time. [Solution] An evaporation chamber 40 is formed on the internal space A side of a mechanical seal 30. An intake port 71 on the mechanical seal 30 side and an exhaust port 81 on an electric motor 12 side are formed in the evaporation chamber 40, and the exhaust port 81 is communicated with outdoor air space via an exhaust passage 82 that passes through in proximity to the electric motor 12. A sealing liquid that has leaked from the mechanical seal 30 is temporarily retained in the evaporation chamber 40, heated and evaporated (made into a gas) by the waste heat of the electric motor 12 and the mechanical seal 30, and expelled from the exhaust port 81 to the outdoor air space through the exhaust passage 82. The leaked sealing liquid is thereby prevented from entering a bearing 14 or the electric motor 12.

## Description

### TECHNICAL FIELD

The present invention relates to a shaft seal device used for a pump and a generator or so and also relates to a submersible pump using the shaft seal device thereof.

### DESCRIPTION OF THE RELATED ART

For a submersible pump and submersible generator or so, generally a mechanical seal is used as the shaft seal device so that a sealed liquid (the sealing liquid) and a power generating fluid do not infiltrate to a motor or a generator (for example, see Patent document 1). For such type of device including the shaft seal device and the pump device as disclosed in the patent document 1, in many cases, an oil chamber is provided between the sealed liquid or the power generating fluid, and the motor or the generator to seal the oil, thereby the mechanical seal is lubricated, and also even if the sealed liquid or so infiltrates to the oil chamber, it is prevented from infiltrating to the motor or generator or so. The sealed oil has lower chances of causing malfunctions to the device even if it infiltrates to the motor or the generator compare to the sealed liquid or so, thus such configuration is widely used.

For such conventional shaft seal device and the pump device, in order to have the oil chamber, usually a double type mechanical seal is used wherein two mechanical seals are provided in axial direction so that each of the sliding face faces the opposite direction. However, the double type mechanical seal has complicated configuration and is a large size seal, thus it was a disadvantage in case of downsizing, and hence an improvement was demanded. Also, for such conventional shaft seal device and pump device, the process to seal the oil and the process to maintain the sealed oil are necessary; hence the improvement from this point is also demanded.

The shaft seal device or the pump device can be constituted by using the single type mechanical seal without having the oil chamber, but in this case, the sealing liquid or so may infiltrate to the motor or the generator, thus a use for a long period of time without maintenance is difficult.

### PRIOR ART

### Patent Document

Patent document 1: JP Patent Application Laid Open No. 2014-142051

### DISCLOSURE OF INVENTION

### Problem to be solved by the invention

The present invention has been achieved in view of such circumstances, and the object is to provide the shaft seal device and the submersible pump with simple configuration and capable of downsizing the device, and also capable of long term use without the maintenance.

### Means for attaining the object

In order to attain the above mentioned object, the shaft seal device according to the present invention is a shaft seal device sealing between a sealing liquid space and an internal space inside a housing along a rotary shaft of a rotary machine provided inside said housing, wherein said shaft seal device comprises
a mechanical seal provided at one end of said rotary shaft,
an evaporation chamber formed at said internal space of said mechanical seal and capable of temporary retaining the sealing liquid leaked from said mechanical seal,
an air inlet opening formed at said evaporation chamber and connecting to outside air space, and
an air outlet opening formed at said evaporation chamber and connecting to outside air space, wherein
said evaporation chamber and a passage connecting to said outside air space from said air outlet opening are heated by a heat generated at said rotary machine and said mechanical seal.

According to the shaft seal device of the present invention having such constitution, the sealing liquid which has leaked from the mechanical seal is temporarily retained in the evaporation chamber and discharged to the outside air space from the air outlet opening by evaporation, thus the leaked sealing liquid is prevented from infiltrating to the rotary machine, and long period use without a maintenance can be achieved.

Preferably, said air inlet opening is formed at the mechanical seal side than said air outlet opening along the axial direction of said rotary shaft; and said air outlet opening is formed at said rotary machine side than the air inlet opening along said axial direction.

Also, preferably the shaft seal device according to the present invention further comprises an internal impeller integrally rotating with said rotary shaft so as to forcibly generate the air flow which is taken in from the air inlet opening and discharged from the air outlet opening through said evaporation chamber.

Said internal impeller may be provided in said evaporation chamber, or it may be provided in a sub evaporation chamber connecting to said evaporation chamber through a middle passage in said housing.

According to the shaft seal device of the present invention having such constitution, the sealing liquid leaked from the mechanical seal and retained in the evaporation chamber can be discharged to the outside air space through the air outlet opening even more efficiently.

Also, the shaft seal device according to the present invention may further comprise a liquid absorption material placed between said mechanical seal and said air outlet opening, and absorbs said sealing liquid which have leaked.

According to the shaft seal device of the present invention having such configuration, even in case the amount of the leakage of the sealing liquid temporarily increases, the leaked sealing liquid can be appropriately prevented from infiltrating to the rotary machine.

Preferably, the shaft seal device according to the present invention further comprises an air inlet pipe having one end connected to said air inlet opening and other end provided at said outside air space, and an air outlet pipe having one end connected to said air outlet opening and other end provided at said outside air space, and
said air inlet opening and said air outlet opening are respectively connected to said outside air space via said inlet pipe and said air outlet pipe.

Also, preferably the shaft seal device according to the present invention further comprises either one of a blower provided at said air inlet pipe to supply an outside air to said inlet pipe, or a blower provided at said air outlet pipe to discharge an air taken in through said air outlet pipe.

For the shaft seal device having such constitution, for example even in case it is used for the submersible pump immersed in the water, the leaked sealing liquid from the mechanical seal can be surely discharged to the outside air space.

Preferably, said mechanical seal is a single type mechanical seal.

For the shaft seal device having such embodiment, the device has a simple configuration, the maintenance is easy, the size is made compact, and the cost can be reduced.

Also, the shaft seal device of the present invention is used for a submersible pump wherein said one end of said rotary shaft is connected to a submerged impeller in a water, and said rotary shaft is held by a bearing in a rotatable manner, and
said evaporation chamber is formed between said bearing and said mechanical seal provided at said rotary shaft.

By using the shaft seal device having such embodiment, the water leaked from the mechanical seal can be appropriately prevented from infiltrating to the bearing, and the constitution of the device is simplified and can be downsized, and further the water pump which can be used for a long period of time without maintenance can be provided.

Also, the submersible pump according to the present invention comprises any one of the shaft seal device discussed in above.

### BRIEF DESCRIPTION OF DRAWINGS

- **Fig. 1**: is a schematic cross section showing the configuration of the submersible pump comprising the shaft seal device of the first embodiment of the present invention.
- **Fig. 2**: is a schematic cross section showing the configuration of the submersible pump comprising the shaft seal device of the second embodiment of the present invention.
- **Fig. 3**: is a schematic diagram showing the configuration of the submersible pump comprising the shaft seal device of the third embodiment of the present invention.
- **Fig. 4A to Fig. 4C**: are the figures showing the structure of the liquid absorption material comprised by the submersible pump shown in Fig.3, and Fig.4A is a planner view showing the structure of the liquid absorption material.
- **Fig.4 B**: is a planner view showing the structure of other liquid absorption material.
- **Fig. 4C**: is a cross section showing the structure of the liquid absorption material, and it is a cross section along V-V line of Fig.4A.
- **Fig. 5A to Fig.**: **5C** are the figures for explaining the method of mounting the liquid absorption material shown in Fig.3, and Fig.5A is a figure showing the embodiment of mounting the liquid absorption material to the housing of the submersible pump.
- **Fig. 5B**: is a figure showing the embodiment of providing the liquid absorption material to the housing of the submersible pump.
- **Fig. 5C**: is a figure showing the embodiment of mounting the liquid absorption material to the housing of the submersible pump.
- **Fig. 6**: is a schematic cross section showing the configuration of the submersible pump comprising the shaft seal device of the fourth embodiment of the present invention.
- **Fig. 7**: is a schematic cross section showing the configuration of the submersible pump comprising the shaft seal device of the fifth embodiment of the present invention.
- **Fig. 8**: is a schematic cross section showing the configuration of the submersible pump comprising the shaft seal device of the sixth embodiment of the present invention.

### EMBODIMENTS TO CARRY OUT THE INVENTION

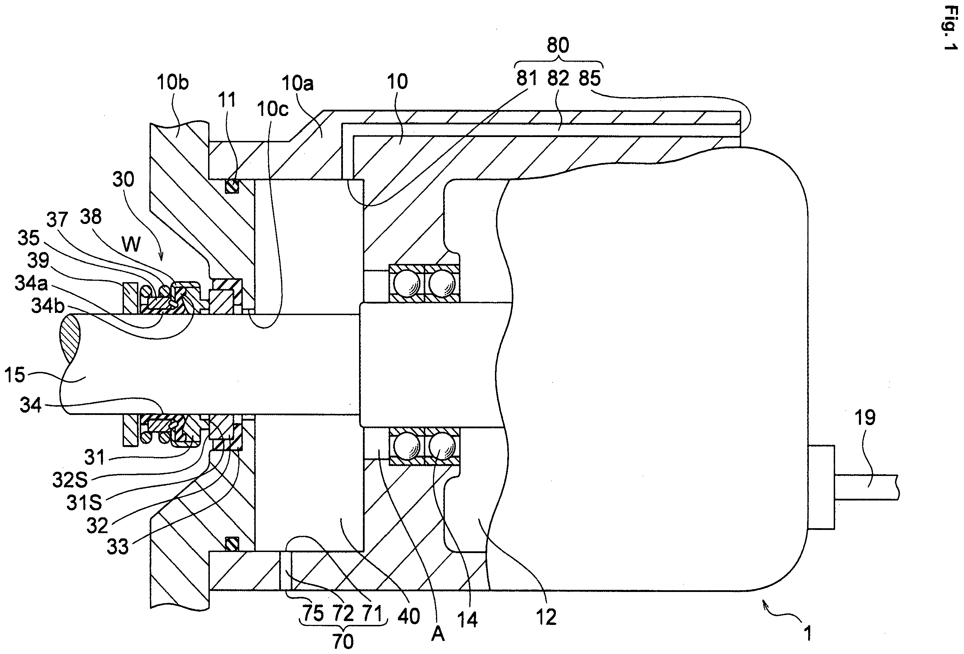

The embodiment of the present invention will be described in detail by referring to Fig.1 to Fig.8.

The first to sixth embodiment described in below applies the shaft seal device according to the present invention to the submersible pump which is used by immersing the pump main body into the water. For each embodiment, the shaft seal device of the present invention is placed along the rotary shaft of the motor in order to seal between the subaqueous space (the sealing liquid space) where the submerged impeller is placed and the motor side inner space of the submersible pump.

### First embodiment

Fig.1 is a schematic cross section diagram showing the configuration of the motor side of a submersible pump 1 according to the first embodiment of the present invention, and the submerged impeller side of the submersible pump 1 is not shown in the figure.

As shown in Fig.1, the submersible pump 1 comprises a housing 10. The housing 10 mainly comprises a first housing member 10a constituting the casing of the motor 12, and a second housing member 10b constituting the pump main body of the submersible pump 1. The first housing member 10a and the second housing member 10b are integrally fit by placing an O ring 11 in between.

The first housing member 10a is formed with a motor side internal space A (hereinafter, it may be referred simply as the internal space A) which houses the motor 12 or so therein. Also, the second housing member 10b constitutes the casing which houses the submerged impeller provided at one end of a rotary shaft 15 in a sealing liquid space W. The sealing liquid space W is a space necessary for maintaining the air tightness of the motor side internal space A of the submersible pump 1; and for the submersible pump 1 of the present embodiment, it is a space connecting to a subaqueous space where the submersible pump 1 is introduced in. The submerged impeller not shown in the figure of the submersible pump 1 provides a thrust to the sealing liquid in the sealing liquid space W, and allows the submersible pump 1 to function as the pump.

Also, the housing 10 is formed with a hole 10c which connects the motor side internal space A of the submersible pump 1 and the sealing liquid space W, and also the rotary shaft 15 of the motor 12 penetrates through the hole 10c.

The motor 12 is provided by being fixed at the internal space A of the housing 10. The motor 12 is controlled by the electric power and control signal or so which is input from the outside via the cable 19. The rotary shaft 15 of the motor 12 is held by the bearing 14 in a rotatable manner, and the free end thereof reaches to the sealing liquid space (the subaqueous space) by penetrating through the hole 10c of the housing 10, and at the end part thereof, the submerged impeller not shown in the figure is provided.

At the part where the rotary shaft 15 passes through the hole 10c of the housing 10, a mechanical seal 30 is provided. The mechanical seal 30 seals the space between the sealing liquid space W and the internal space A, along the rotary shaft 15. In other words, the mechanical seal 30 seals the space between the outer circumference face of the rotary shaft 15 and the inner circumference face of the hole 10c of the housing 10.

The mechanical seal 30 comprises a rotary sealing ring 31 having a rotary side sliding face 31s, a stationary sealing ring 32 having a stationary side sliding face 32s which slides by closely contacting to the rotary side sliding face 31s, a cup gasket 33 installed between the stationary sealing ring 31 and the housing 10, a bellows 34 which is provided with the rotary sealing ring 31, a fastening ring 35 for mounting the bellows 34 to the rotary shaft 15, a spring 37 energizing the rotary sealing ring 31 to the direction of the stationary sealing ring 32, a mounting metal part 38 connecting the rotary sealing ring 31 and the bellows 34, and a collar 39 where one end of the spring 37 is contacted.

The bellows 34 comprises a cylinder part 34a installed by attaching to the outer circumference face of the rotary shaft 15, and a bellow part 34b formed integrally to one end of the internal space A side of the cylinder part 34a. In order to attach the cylinder part 34a of the bellows 34 to the outer circumference face of the rotary shat 15, the fastening ring 35 is placed at the outer circumference face of the cylinder part 34a, and the cylinder part 34a is fastened to the outer circumference face of the rotary shaft 15.

The bellow part 34b of the bellows 34 can be resiliently deformed along the axial direction of the rotary shaft 15; and at the outer circumference part of the bellow part 34b, the backside of the rotary sealing ring 31 is fit in a form of ridges and grooves. The ring form outer circumference part of the bellow part 34b and the outer circumference part of the rotary sealing ring 31 are integrally formed by a caulking member which is not shown in the figure of the mounting metal part. Also, the ridge part not shown in the figure formed at the inner circumference face of the caulking part of the mounting metal part 38 and a notch not shown in the figure formed at the outer circumference face of the rotary sealing ring 31 engages, thereby the rotary sealing ring 31 is prevented from rotating with respect to the shaft.

The spring 37 is placed at the outer circumference side of the bellows 34. One end in the axial direction of the spring 37 contacts with the backside of the mounting metal part 38, and other end of the axial direction of the spring 37 is in contact with the collar 39 which is fixed to the rotary shaft 15. Due to the spring force of this spring 37, the rotary sealing ring 31 is applied with a force to the direction of the stationary sealing ring 32 via the mounting metal part 38, and the rotary side sliding face 31s of the rotary sealing ring 31 is in close contact with the stationary side sliding face 32s of the stationary sealing ring 32.

The cup gasket 33 is placed between the stationary sealing ring 32 and the housing 10. The cup gasket 33 is held between the outer circumference face of the stationary sealing ring 32 and the step face formed at the hole 10c of the housing 10, in a compressed manner. The engagement part not shown in the figure is constituted at the contact face between the cup gasket 33 and the stationary sealing ring 32, and the stationary sealing ring 32 is prevented from rotating together with the rotary sealing ring 31.

In the submersible pump 1 of the present embodiment, the rotary sealing ring 31 and the stationary sealing ring 32 are for example constituted by carbon, SiC, ceramics, or metals such as ultrahard alloy or so. Also, the bellows 34 is constituted by the material capable of deforming resiliently, such as rubber and synthetic resin, or spring material or so; and the fastening ring 35 and the mounting metal part 38 are for example constituted by metal or so. Also, the cup gasket 33 is constituted by a rubber material or synthetic resin or so having excellent resiliency.

The mechanical seal 30 of the submersible pump 1 of the present embodiment is a single type mechanical seal having a set of the sealing faces (the rotary side sliding face 31s, the stationary side sliding face 32s) which attach and slide, and it is an inside type mechanical seal wherein the sealing liquid space W is arranged on the outer circumference side. Due to the mechanical seal 30 having such constitution, the sealing liquid space (the subaqueous space) W and the internal space A are sealed.

As shown in the figure, a hollow part as the evaporation chamber 40 is formed at the space between the outer circumference face of the rotary shaft 15 and the inner circumference face of the housing 10 (the first housing member 10a), which is also the space between the end face of the sealing liquid space W side of the fist housing member 10a in the axial direction and the end face of the internal space A side of the second housing member 10b. The evaporation chamber 40 is formed adjacent to the motor 12 side of the mechanical seal 30 of the internal space A of the submersible pump 1.

In case the sealing liquid leaks from the mechanical seal 30, the evaporation chamber 40 is a space to temporarily retain the sealing liquid which has leaked.

At the inner circumference face of the housing 10 forming the circumference face of the evaporation chamber 40, the air inlet opening 71 is formed which connects to the air inlet port 75 formed at the outer face of the housing 10 via the air inlet passage 72 penetrating through the housing 10. The air inlet opening 71 is formed at the circumference face of the evaporation chamber 40 near the mechanical seal 30, and at least at the mechanical seal 30 side than the air outlet opening 81. The air inlet passage 72 connecting to the air inlet opening 71 is formed by penetrating through the housing 10 in the radial direction as shown in the figure, and it reaches to the air inlet port 75 via the relatively short passage.

When using the submersible pump 1 by submersing in the water, at the air inlet port 75, one end of the air inlet pipe which is not shown in the figure is attached, whereas other end thereof is opened to the outside space. Thereby, the air inlet opening 71 is connected to the outside air space, and the evaporation chamber 40 can be ventilated with the outside air space through the air inlet opening 71. Note that, the air inlet opening 71, the air inlet passage 72 and the air inlet port 75 constitute the air inlet system for the evaporation chamber 40.

Similarly, at the inner circumference face of the housing 10 forming the circumference face of the evaporation chamber 40, the air outlet opening 81 is connected to the air outlet port 85 formed at the outer face of the housing 10 via the air outlet passage 82 penetrating through the housing 10. The air outlet opening 81 is formed at the side of the motor 12 of the evaporation chamber 40, and is formed at least towards the motor 12 side than the aforementioned air inlet opening 71. The air outlet passage 82 connecting to the air outlet opening 81, as shown in the figure, comprises the passage part which is penetrating through the inside of the housing 10 near the motor 12 in the axial direction, and it reaches to the air outlet port 85 formed at the motor 12 side end part of the submersible pump 1 via a relatively long passage.

When submersing the submersible pump 1 in the water, one end of the air outlet pipe not shown in the figure is mounted at the air outlet port 85, whereas other end thereof is opened to the outside air space. Thereby, the air outlet opening 81 is connected to the outside air space, and the evaporation chamber 40 can be ventilated with the outside air space via the air outlet opening 81. Note that, the air outlet opening 81, the air outlet passage 82 and the air outlet port 85 constitute the air outlet system 80 for the evaporation chamber 40.

Note that, in Fig.1, one inlet system including the air inlet opening 71 and one outlet system including the air outlet opening 81 are shown in the figure for each system, but the submersible pump 1 may comprise plurality of systems respectively.

For the submersible pump 1 having such constitution, the motor 12 and the mechanical seal 30 (or the bearing 14) generates heat due to the rotation of the rotary shaft 15. The heat generation (heat exhaustion) of such motor 12 and the mechanical seal 30 raises the temperature, through the housing 10, of the evaporation chamber 40 and each parts of the air inlet and air outlet systems which are placed between the motor 12 and the mechanical seal 30.

As a result, in case the leaked sealing liquid from the mechanical seal 30 is retained in the evaporation chamber 40, the sealed liquid is heated and evaporated (vaporized) by the temperature increase of the evaporation chamber 40.

Also, the air inlet opening 71 and the air outlet opening 81 are formed in the evaporation chamber 40, but the degree of temperature increase of the air outlet passage 82 connecting to the air outlet opening 81 is higher due to a long passage near the motor 12. Also, as the air inside of the outlet passage 82 is heated and discharged to the outside air space, the air flow from the evaporation chamber 40 to the air outlet system 80 is generated, and also the air circulation in the evaporation chamber 40 is facilitated, hence at the end, the air flow from the air inlet system 70 to the air outlet system 80 through the evaporation chamber 40 is generated continuously and persistently. That is, the sealing liquid leaked from the mechanical seal 30 and retained in the evaporation chamber 40 is evaporated in the evaporation chamber 40, and discharged to the outside air space (the atmospheric space) from the air outlet opening 81 via the air outlet passage 82, the air outlet port 85 and the air outlet pipe not shown in the figure.

As such, for the submersible pump 1 according to the first embodiment, the evaporation chamber 40 is formed at the internal space side A of the mechanical seal 30, and the air inlet system 70 including the air inlet opening 71 and the air outlet system 80 including the air outlet opening 81 are connected to the evaporation chamber 40. Further, the evaporation chamber 40 and the air outlet passage 82 are heated by the heat exhaustion of the mechanical seal 30 and the motor 12, thereby the sealing liquid leaked from the mechanical seal 30 is efficiently evaporated, and it is continuously and persistently discharged to the outside air space through the air outlet opening 81.

As a result, the sealing liquid infiltrated to the internal space A by leaking out from the mechanical seal 30 can be prevented from entering inside the motor 12 and the bearing 14, thereby the malfunction of the bearing 14 and the motor 12 caused by the leakage of the sealing liquid from the mechanical seal 30 can be prevented, and the durability of the submersible pump 1 can be enhanced. Also, the submersible pump 1 can be used for a long period of time without maintenance. That is, the continuous driving time of the submersible pump 1 can be prolonged.

Also, for the submersible pump 1 comprising the shaft seal device having such configuration, the liquid leaked from the mechanical seal 30 can be discharged appropriately, hence the conventional double type mechanical seal used as the mechanical seal 30 of the shaft seal device can be substituted to a single type mechanical seal. As a result, the configuration of the mechanical seal is simplified and can be downsized; moreover the configuration of the shaft seal device or the submersible pump can be simplified and downsized.

Note that, in the submersible pump 1 of the first embodiment, the shaft seal device according to the present invention has a constitution comprising the mechanical seal 30, the evaporation chamber 40, the air inlet system 70 and the air outlet system 80.

### Second embodiment

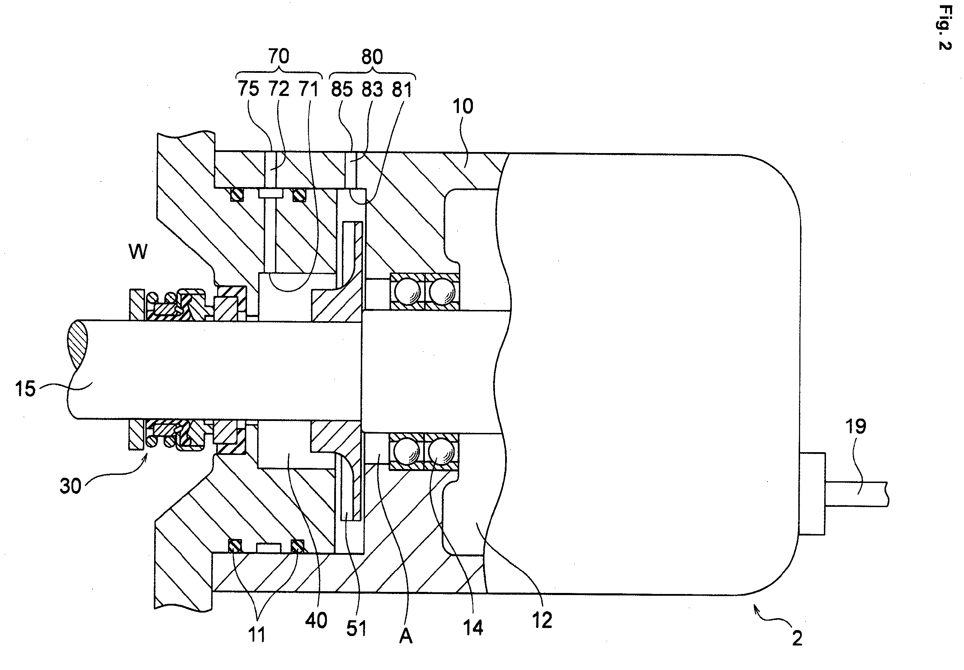

Fig.2 is a schematic cross section showing the configuration of the motor side of the submersible pump 2 according to the second embodiment of the present invention, and the submersible pump 2 from the submerged impeller side is not shown in the figure as similar to the submersible pump 1 of the first embodiment discussed in the above by referring to Fig.1. For the submersible pump 2 shown in Fig.2, for the same structure as the submersible pump 1 of the aforementioned first embodiment, basically the same number is given and the explanation thereof will be omitted.

The differences between the submersible pump 2 of the second embodiment and the submersible pump 1 of the first embodiment are the configuration of the air outlet passage 83 connecting the air outlet opening 81 and the air outlet port 85 of the air outlet system 80, and the internal impeller 51 provided to the evaporation chamber 40.

For the submersible pump 1 of the first embodiment, as shown in Fig.1, the air outlet passage 82 connecting to the air outlet opening 81 which is formed at the inner circumference face of evaporation 40 reached to the air outlet port 85 through a relatively long passage penetrating inside of the housing 10 in the axial direction near the motor 12. On the contrast, as shown in Fig.2, the air outlet passage 83 of the submersible pump 2 of the second embodiment is formed at the passage penetrating the housing 10 in the radial direction, and it is a relatively short passage as similar to the air inlet passage 72. Note that, the air outlet opening 81 and the air outlet passage 83 connecting thereto are formed at the motor 12 side than the air inlet opening 71 and the air inlet passage 72 connecting thereto, which is the same as the submersible pump 1 of the first embodiment.

Also, in connection to the fact that the air outlet passage 83 is formed as such, the internal impeller 51 is provided at the position in the axial direction where the air outlet opening 81 of the evaporation chamber 40 is formed. The internal impeller 51 is an impeller installed to the rotary shaft 15, and it is a member capable of forcibly generating the airflow in the evaporation chamber 40 by integrally rotating with the rotary shaft 15. For the submersible pump 2, as shown in Fig.2, the air outlet opening 81 is formed at outer circumference side of the internal impeller 51. The shape of the blade of the internal impeller 51 is constituted so as to generate the air flow to the outer circumference direction of the internal impeller 51 from the surrounding part of the rotary shaft 15 of the evaporation chamber 40, as a result of the predetermined rotation of the rotary shaft 15 (the rotation to the rotational direction when the submersible pump 2 is driven).

By providing such internal impeller 51 to the evaporation chamber 40, in case the sealing liquid leaked from the mechanical seal 30 is retained in the evaporation chamber 40, the sealing liquid is heated and evaporated as the temperature of the evaporation chamber 40 increases, and furthermore the air flow forcibly generated by the internal impeller 51 facilitates the evaporation of the sealing liquid. Also, the vaporized sealing liquid is efficiently discharged to the outside air space (the atmospheric space) through the air outlet passage 83, the air outlet port 85 and the air outlet pipe not shown in the figure, due to the air flow towards the air outlet opening 81 direction from the evaporation chamber 40 which is forcibly generated by the internal impeller 51. That is, the sealing liquid leaked from the mechanical seal 30 is efficiently evaporated, and continuously and persistently discharged to the outside air space via the air outlet opening 81.

As a result, for the submersible pump 2, as similar to the submersible pump 1 of the first embodiment, the sealing liquid leaked from the mechanical seal 30 can be prevented from infiltrating into the motor 12 or the bearing 14, and the malfunction of the bearing 14 and the motor 12 is prevented, hence the durability of the submersible pump 2 is enhanced and it can be used for a long period of time without a maintenance. Also, since the mechanical seal 30 provided to the shaft seal device can be a single type mechanical seal, the configuration of the mechanical seal can be simplified and downsized, and moreover the configuration of the shaft seal device and the submersible pump can be simplified and downsized.

In general, the amount of leakage of the sealing liquid from the mechanical seal is influenced by the shaft diameter of the rotary shaft, but in case the shaft diameter is 50 mm or less, the amount of leakage is empirically about 0.1 ml/hr or less. If the amount of leakage is about that level, the leaked sealing liquid can be discharged by evaporating naturally although it may be influenced by the outside temperature or so. However, for the submersible pump used by submersing the pump main body in the water as in the present embodiment, the leaked sealing liquid may be difficult to discharge only by natural evaporation. On the other hand, in case of the structure comprising the internal impeller 51 as in case of the submersible pump 2 of the present embodiment, the evaporation of the leaked sealing liquid and the discharge to the outside air space through the air outlet system 80 can be carried out efficiently and securely.

Also, for the submersible pump 2 of the present embodiment, by providing the internal impeller 51 to the evaporation chamber 40, the evaporation of the leaked sealing liquid and the discharge to the outside air space via the outlet system 80 can be carried out efficiently and securely without passing through the outlet passage 82 of a long passage near the motor 12 as in the submersible pump 1 of the fist embodiment. As a result, the configuration of the air outlet passage 83 and the housing 10 can be simplified, and the downsizing and the cost reduction of the submersible pump can be attained.

Note that, in the submersible pump 2, the amount of the leaked sealing liquid which can be collected and discharged can be controlled to a predetermined amount by changing the diameter of the air inlet opening 71 and the air inlet passage 72 of the air inlet system 70, the diameter of the air outlet opening 81 and the air outlet passage 83 of the air outlet system 80, and the air flow amount generated by the internal impeller 51; and depending on the used environment and the load of the submersible pump 2 and the shaft diameter of the motor 12 or so, a preferable function can be obtained.

Note that, in the submersible pump 2 of the second embodiment, the shaft seal device according to the present invention has a constitution comprising the mechanical seal 30, the evaporation chamber 40, the internal impeller 51, the air inlet system 70 and the air outlet system 80.

### Third embodiment

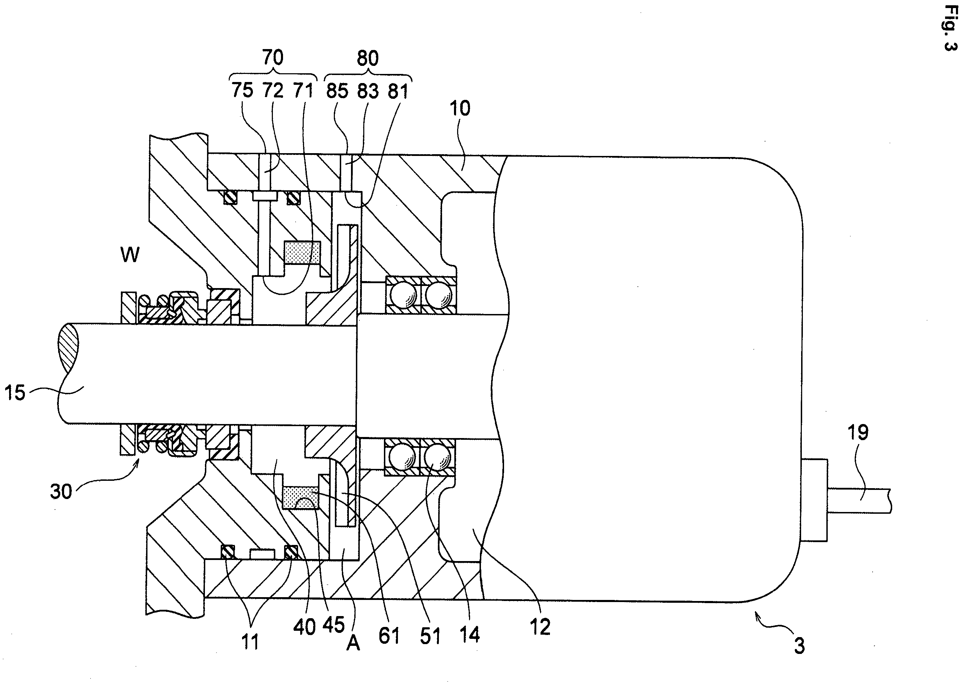

Fig.3 is a schematic cross section figure showing the configuration of the motor side of the submersible pump 3 according to the third embodiment of the present invention, and as similar to the submersible pump of each embodiment discussed in above, the submersible pump 3 of the submerged impeller side is not shown in the figure. Regarding the submersible pump 3 shown in Fig.3, for the same structure as the submersible pump of each embodiment discussed in the above, basically the same reference number as the aforementioned embodiment is given and the explanation thereof will be omitted.

The difference between the submersible pump 3 of the third embodiment and the submersible pump 2 of the second embodiment is that the liquid absorption material 61 is provided to the evaporation chamber 40. For the submersible pump 3 of the third embodiment, the liquid absorption material mounting groove 45 is formed between the air inlet opening 71 and the air outlet opening 81 along the axial direction, which is at the inner circumference face of the housing 10 forming the circumference face of the evaporation chamber 40, and in other words it is formed between the air inlet opening 71 and the internal impeller 51. The liquid absorption material 61 having a ring shape is provided at this liquid absorption material mounting groove 45. Due to the capillary phenomenon, the liquid absorption material 61 temporarily absorbs the sealing liquid which has leaked from the mechanical seal 30 and infiltrated to the evaporation chamber 40, but on the other hand the liquid absorption material enables to discharge the absorbed liquid by evaporation using heat or the circulating air flow or so.

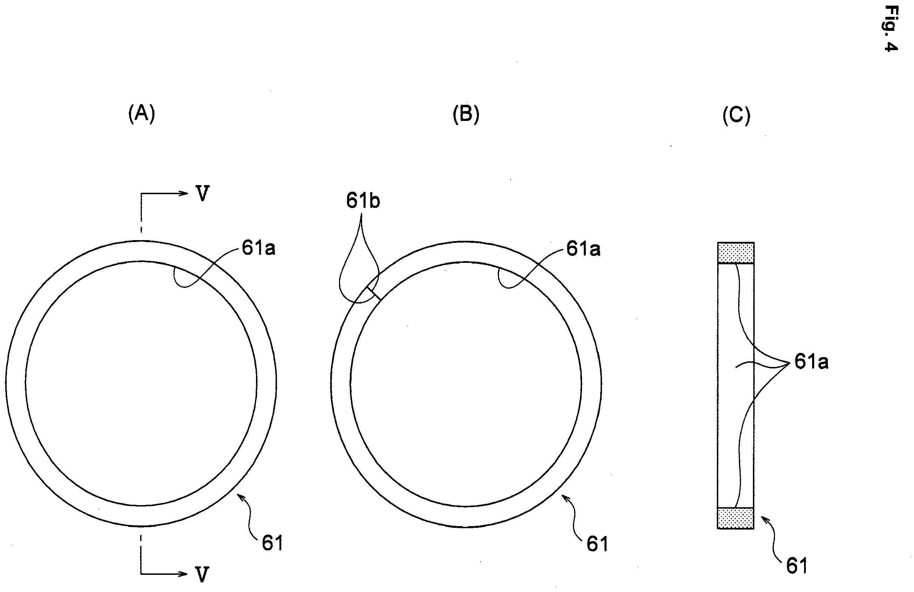

The liquid absorption material 61 is a member wherein a ring form member as shown in Fig.4A formed by a fabric or a sponge or so, or it is the material made of a fabric or a sponge or so formed into a belt shape or cylinder shape cut into a necessary length corresponding to the liquid absorption material mounting groove 45 so that it can be mounted to a liquid absorption material mounting groove 45 in a ring form by contacting the both end of the cut faces 61b as shown in Fig.4B. In any case, by mounting the liquid absorption material 61 to the liquid absorption material mounting groove 45 formed at the evaporation 40, the ring form liquid absorption material 61 is configured as shown in Fig.4A or Fig.4B, or as shown in Fig.4C having the radial direction cross section.

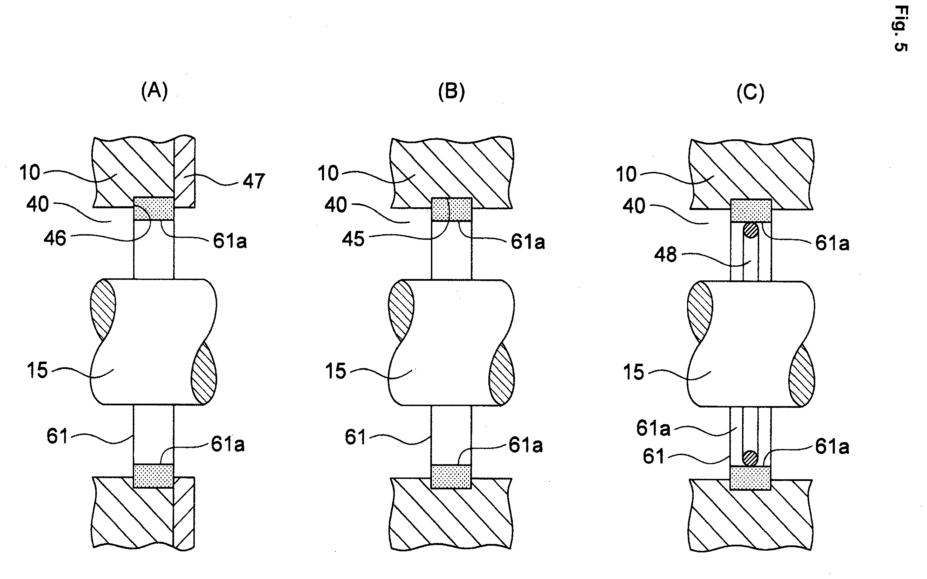

Also, as shown in Fig.5A, the liquid absorption material 61 is mounted to the liquid absorption material mounting groove 45 of the evaporation chamber 40 by providing the liquid absorption material 61 to the step face 46 formed at the circumference face of the evaporation chamber 40, then fixing the liquid absorption material 61 in the axial direction by a stopper. Alternatively, as shown in Fig.5B, it may be done by temporarily deforming a resilient liquid absorption material 61 to fit to the liquid absorption material mounting groove 45 of the evaporation chamber 40. Also, as shown in Fig.5C, a stretch ring 48 is further mounted to the inner circumference face 61a of the liquid absorption material 61 so that it is fitting to the liquid absorption material mounting groove 45 of the evaporation chamber 40 as shown in Fig.5B, thereby pressing and fixing the water absorption material 61 to the inner circumference face (the circumference face of the evaporation chamber 40) of the housing 10 in the radial direction.

Note that, if there is a chance that the liquid absorption material 61 falling off from the liquid absorption material mounting groove 45 by absorbing the liquid and deforming, then in this case in order to prevent the liquid absorption material 61 from falling off, preferably the material of the liquid absorption material such as a fabric or a sponge or so are integrally formed with the resin or the resilient body such as metal mesh or so, or the liquid absorption material is combined with the resilient body for example as shown in Fig.5C.

Also the liquid absorption material 61 of the submersible pump 3 is preferably placed so that the inner circumference face 61a thereof faces the circumference face of the rotary shaft 15, as shown in Fig.3 to Fig.5. Thereby, the sealing liquid leaked from the mechanical seal 30 is blown towards the outer side in the radial direction by the centrifugal force due to the rotation of the rotary shaft 15, and contacts to the inner circumference face 61a of the liquid absorption material 61 easily. As a result, the leaked sealing liquid can be efficiently absorbed by the liquid absorption material 61.

In general, the amount of the leakage of the sealing liquid from the mechanical seal is not necessarily always constant, and the amount of leakage may temporarily increase due to the condition of the sliding face of the mechanical seal and the jamming of the foreign object to the sliding face. For the submersible pump 3 of the third embodiment, by providing such liquid absorption material 61 to the evaporation chamber 40, in case the amount of leakage of the sealing liquid increases temporarily, the liquid absorption material 61 provided at the evaporation chamber 40 can absorb the leaked sealing liquid.

That is, for the usual driving of the shaft seal device of the submersible pump 3, the sealing liquid leaked from the mechanical seal 30 and infiltrated to the evaporation chamber 40 is evaporated (vaporized), by the temperature increase (heated) of the evaporation chamber 40 due to the heat generated (heat exhaustion) by the motor 12 and mechanical seal 30 or so, and by the air flow forcibly generated by the internal impeller 51, then it is discharged to the outside air space via the air outlet opening 81. However, in case the amount of leakage temporarily increases, or in case the sealing liquid leaks more than the discharge amount to the outside air space due to the effect discussed in above, then the excessively generated sealing liquid is temporarily absorbed by the liquid absorption material 61 after the amount of the leaked sealing liquid has decreased and stabilized, and it is discharged to the outside air space by usual function.

As a result, even in case the amount of leakage of the sealing liquid has increased temporarily from the mechanical seal 30, the sealing liquid is prevented from infiltrating into the motor 12 or the bearing 14, thus the malfunction of the bearing 14 and the motor 12 can be prevented, the durability of the submersible pump 3 can be further enhanced, and the submersible pump 3 can be used for even longer period of time without a maintenance.

Note that, for the submersible pump 3 of the third embodiment, the shaft seal device according to the present invention has a constitution comprising the mechanical seal 30, the evaporation chamber 40, the internal impeller 51, the liquid absorption material 61, the air inlet system 70 and the air outlet system 80.

### Fourth embodiment

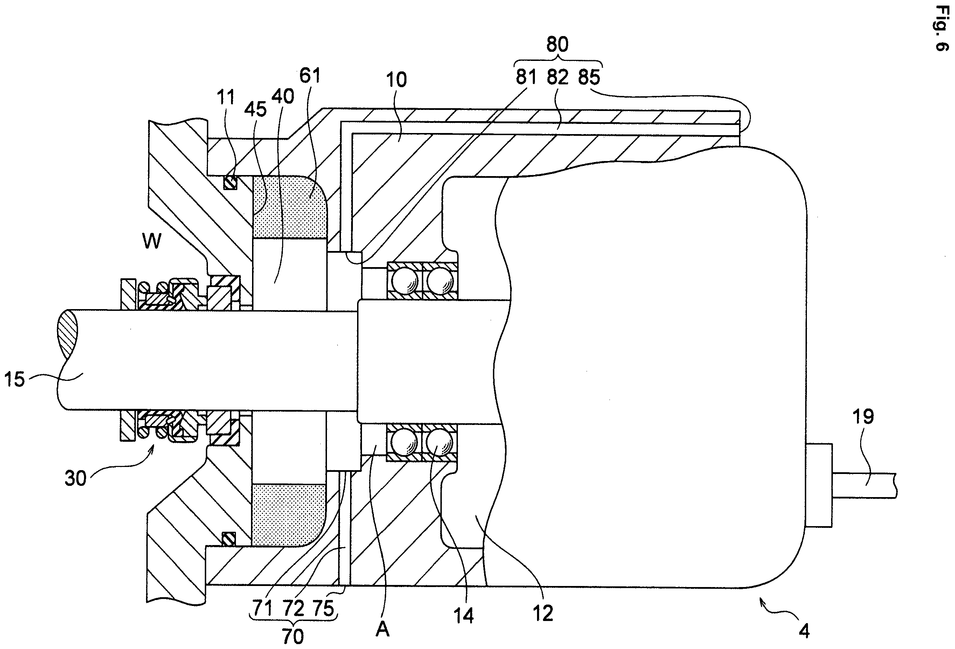

Fig.6 is a schematic cross section showing the motor side of the submersible pump 4 according to the fourth embodiment of the present invention, and as similar to the submersible pump of each embodiment discussed in above, the submerged impeller side of the submersible pump 4 is not shown in the figure. In the submersible pump 4 shown in Fig.6, for the same configuration as the submersible pump of each embodiment discussed in the above, basically the same reference number as the aforementioned embodiment is given and the explanation thereof will be omitted.

The submersible pump 4 shown in Fig.4 is a submersible pump wherein the liquid absorption material 61 of the submersible pump 3 of the aforementioned third embodiment is mounted to the submersible pump 1 of the aforementioned first embodiment.

For the submersible pump 4 of the fourth embodiment, the circumference face of the evaporation chamber 40 is used as the liquid absorption material mounting groove 45, and the liquid absorption material 61 is mounted to this liquid absorption material mounting groove 45. Also, the air inlet system 70 including the air inlet opening 71 formed at the mechanical seal 30 side of the evaporation chamber 40 in the submersible pump 1 of the first embodiment is formed at the position of the motor 12 side of the evaporation chamber 40 for the submersible pump 4 of the present embodiment. The air inlet opening 71 is formed at about the same position as the air outlet opening 81 of the air outer system 80 along the axial direction.

Even for the submersible pump 4 having such constitution, the evaporation chamber 40, the air inlet system 70 and the air outlet system 80 are heated by heat exhaustion (heat generation) of the motor 12 and the mechanical seal 30 or so, and because the outlet passage 82 of the air outlet system 80 passes through the long passage near the motor 12, the degree of temperature increase raises, hence the air flow from the air inlet system 70 to the air outlet system 80 through the evaporation chamber 40 is generated. Also, for the submersible pump 4, the sealing liquid leaked from the mechanical seal 30 and infiltrated to the evaporation chamber 40 will be absorbed in high rate by the liquid absorption material 61 which is placed around the entire circumference face of the evaporation chamber 40, and the leaked sealing liquid will be retained in the evaporation chamber 40. As a result, the sealing liquid retained in the evaporation chamber 40, or the sealing liquid absorbed by the liquid absorption material 61 of the evaporation chamber 40 is stably evaporated (vaporized), and discharged to the outside air space efficiently via the air outlet system 80. In the present invention, the liquid absorption material may be applied to the submersible pump in such embodiment.

Note that, for the submersible pump 4 of the fourth embodiment, the shaft seal device according to the present invention has a constitution comprising the mechanical seal 30, the evaporation chamber 40, the water absorption material 40, the air inlet system 70 and the air outlet system 80.

### Fifth embodiment

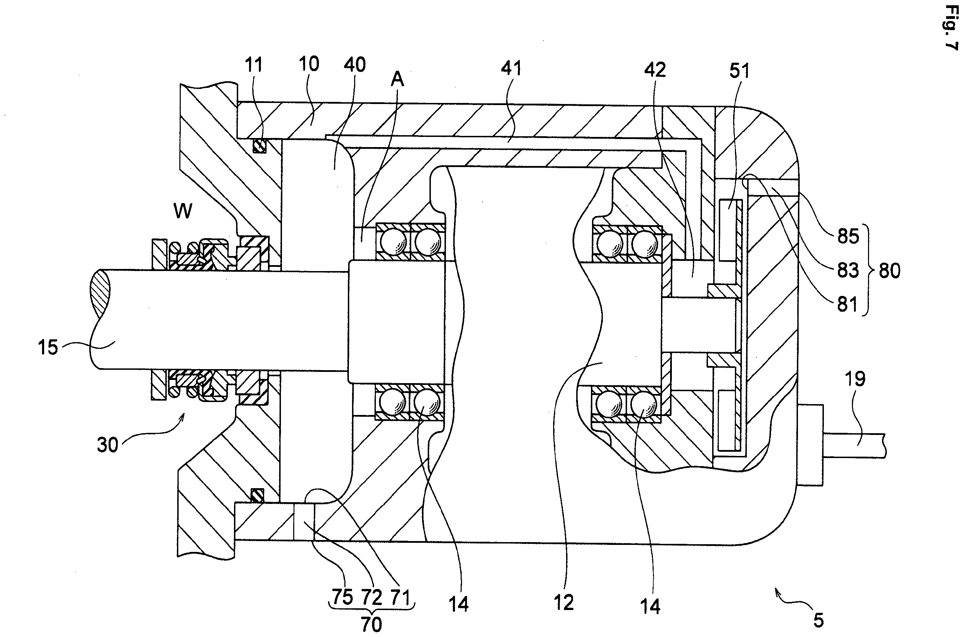

Fig.7 is a schematic cross section showing the configuration of the motor side of the submersible pump 5 according to the fifth embodiment of the present invention, and as similar to the submersible pump of each embodiment discussed in above, the submerged impeller side of the submersible pump 5 is not shown in the figure. In the submersible pump 5 shown in Fig.7, for the same structure as the submersible pump of each embodiment discussed in the above, basically the same reference number as the aforementioned embodiment is given and the explanation thereof will be omitted.

The submersible pump 5 shown in Fig.7 is a submersible pump wherein a sub evaporation chamber 42 is provided the backside of the motor 12 of the submersible pump 1 of the first embodiment which has been discussed by referring to Fig.1, and the internal impeller 51 of the second embodiment which has been discussed in above using Fig.2 is provided at the sub evaporation chamber 42.

As shown in Fig.7, the submersible pump 5 is formed with the sub evaporation chamber 42 wherein the end part of the rotary shaft 15 projects out at the opposite side (the backside) of the evaporation chamber 40 of the motor 12, and the internal impeller 51 is provided at that end part of the rotary shaft 15. As shown in the figure, the rotary shaft 15 is held by the bearing 14,14 from the both side in the axial direction of the motor 12 in a rotatable manner, but the evaporation chamber 40 and the sub evaporation chamber 42 are respectively formed at the opposite side of the motor 12 with respect to the bearing 14,14.

The evaporation chamber 40 and the sub evaporation chamber 42 are connected by the middle passage 41 formed in a similar manner as the air outlet passage 82 of the submersible pump 1 of the first embodiment. That is, the middle passage 41 is a flow passage formed in a relatively long passage to penetrate through the inside of the housing 10 near the motor 12 in an axial direction, and the opening formed at the motor 12 side of the evaporation chamber 40 and the opening formed at the motor 12 side of the sub evaporation chamber 42 are connected. That is, the middle passage 41 connects the evaporation chamber 40 and the sub evaporation chamber 42.

Thus, the internal impeller 51 mounted to the rotary shaft 15 is placed in the sub evaporation chamber 42, and the air outlet system 80 comprising the air outlet opening 81, the relatively short air outlet passage 83 and the air outlet port 85 is formed at the outer circumference side of the internal impeller 51.

The shape of the internal impeller 51 is formed so that it generates an air flow from the surrounding part of the rotary shaft 15 of the sub evaporation chamber 42 to the outer circumference direction of the impeller 51, as a result of the predetermined rotation of the rotary shaft 15 (the rotation to the rotational direction during the usual driving of the submersible pump 5). For the submersible pump 5 having such configuration, in case the internal impeller 51 makes a predetermined rotation, the air flow is generated which flows to the outside air space from the air outlet system 80 through the air inlet system 70, the evaporation chamber 40, the middle passage 41 and the sub evaporation chamber 42.

Therefore, for the submersible pump 5, in case the sealing liquid leaked from the mechanical seal 30 is retained in the evaporation chamber 40, as the temperature of the evaporation chamber 40 increases, the sealing liquid is heated and evaporated, also the evaporation of the sealing liquid in the evaporation chamber 40 is facilitated due to the air flow forcibly generated by the internal impeller 51 of the sub evaporation chamber. The vaporized sealing liquid in the evaporation chamber 40 enters into the sub evaporation chamber 42 from the evaporation chamber through the middle passage 41 due to the air flow forcibly generated by the internal impeller 51, and due to the air flow in the sub evaporation chamber 42 towards the air outlet opening 81, thereby it is discharged to the outside air space (the atmospheric space) through the air outlet passage 83, the air outlet port 85 and the air outlet pipe not shown in the figure.

In the present invention, the configuration of the evaporation chamber (the sub evaporation chamber) and the mounting of the impeller may be such embodiment. For the submersible pump 5 having such embodiment, as similar to the submersible pump of each embodiment discussed in the above, the sealing liquid leaked from the mechanical seal 30 is efficiently evaporated, and it is continuously and persistently discharged to the outside air space via the air outlet opening 81.

Note that, for the submersible pump 5 of the fifth embodiment, the shaft seal device according to the present invention has a constitution comprising the mechanical seal 30, the evaporation chamber 40, the middle passage 41, the sub evaporation chamber 42, the internal impeller 51, the air inlet system 70 and the air outlet system 80.

### Sixth embodiment

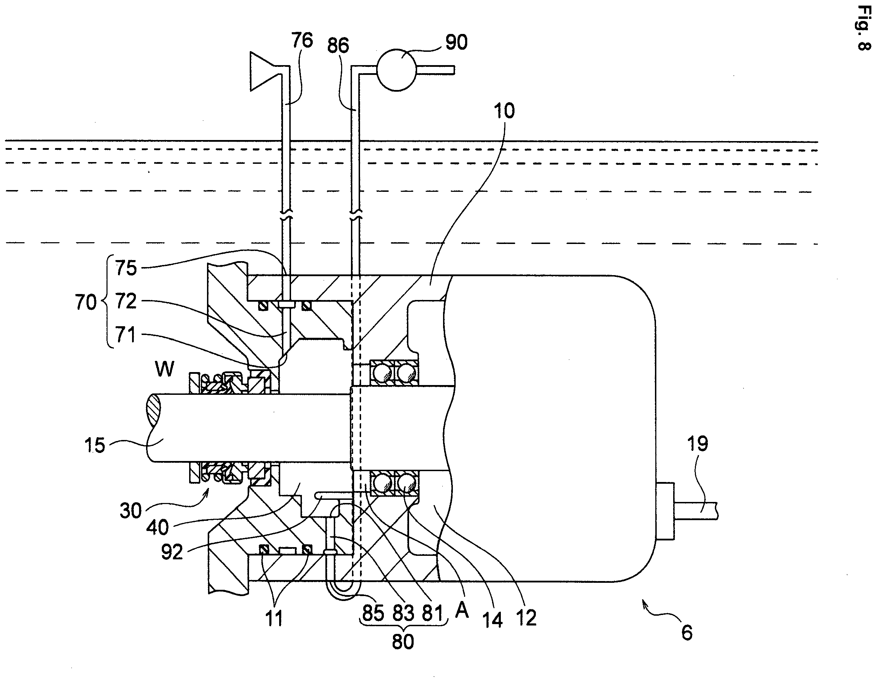

Fig.8 is a schematic cross section showing the configuration of the motor side of the submersible pump 6 of the sixth embodiment of the present invention, and as similar to the submersible pump of each embodiment discussed in above, the submerged impeller side of the submersible pump 6 is not show in the figure. In the submersible pump 6 shown in Fig.7, for the same structure as the submersible pump of each embodiment discussed in the above, basically the same reference number as the aforementioned embodiment is given and the explanation thereof will be omitted.

In the submersible pump 6 shown in Fig.8, with respect to the submersible pump 1 of the first embodiment discussed in above using Fig.1, a leakage detection sensor 92 is provided to the evaporation chamber 40 for detecting the amount of the sealing liquid leaked from the mechanical seal 30 and retained in the evaporation chamber 40, an air inlet pipe 76 is provided which connects to the air inlet port 75 of the inlet system 70, an air outlet pipe 86 is provided which connects to the air outlet port 85 of the air outlet system 80, and a blower 90 is provided at an outside air side end part of the outlet pipe 86.

As shown in Fig.8, the submersible pump 6 is provided with the air inlet pipe 76 of which one end is connected to the air inlet port 75 of the air inlet system 70 and other end is provided to the outside air space above the water; and the submersible pump 6 is also provided with the air outlet pipe 86 of which one end is connected to the air outlet port 85 of the air outlet system 80 and other end is connected to the outside air space above the water. Also, at the end part of the outside air side of the air outlet pipe 86, a blower 90 is provided which is a variable capacity blower generating an air flow to the outer side direction from the inner side of the outlet pipe 86.

Therefore, by forcibly generating the air flow to the outside air space from the inside of the air outlet pipe 86 by driving the blower 90, the air flow taken in from other end of the air inlet pipe 76 flows into the evaporation chamber 40 from the air inlet opening 71 through the air inlet pipe 76 and the inlet system 70, and passes through the evaporation chamber 40, then discharged out from other end of the air outlet pipe 86 via the air outlet opening 81 formed at the evaporation chamber 40 through the air outlet system 80 and the air outlet pipe 86.

As a result, in case the sealing liquid leaked from the mechanical seal 30 is retained in the evaporation chamber 40 of the submersible pump 6, as the temperature of the evaporation chamber 40 increases, the sealing liquid is heated and evaporated, and also the evaporation of the sealing liquid in the evaporation chamber 40 is facilitated by the air flow forcibly generated from the blower 90 provided at other end of the air outlet pipe 86. Further, the sealing liquid vaporized in the evaporation chamber 40 flows into the air outlet pipe 86 passing the air outlet system 80 through the air outlet opening 81 from the evaporation chamber 40 due to the air flow forcibly generated by the blower 90, then it is discharged to the outside air space (the atmospheric space) through the air outlet pipe 86.

Also, in the submersible pump 6, the leakage detection sensor 92 is provided to the evaporation chamber 40 which detects the presence and the amount of the leaked sealing liquid retained in the evaporation chamber 40, and the air blowing amount of the blower 90 is controlled based on the detection results of the leakage detection sensor 92. Therefore, in case the amount of leakage of the sealing liquid from the mechanical seal 30 increases, the air amount blown by the blower 90 is increased to make stronger (increase) forcibly generated air flow, thereby the amount of the sealing liquid discharged by evaporating in the evaporation chamber can be increased. Also, if the amount of leakage of the sealing liquid from the mechanical seal 30 is decreased, then the air amount blown by the blower 90 is decreased to make weaker (increase) forcibly generated air flow, thereby the sealing liquid discharged by evaporating in the evaporation chamber can be controlled to an appropriate amount.

The submersible pump of the present invention may be carried out by a such embodiment, and for the submersible pump 6 having such embodiment, as similar to the submersible pump of each embodiment discussed in above, the sealing liquid leaked from the mechanical seal 30 is efficiently evaporated and discharged continuously and persistently to the outside air space through the air outlet opening 81.

Also, for the submersible pump 6 of the present embodiment, the driving amount of the blower 90 can be controlled by the leakage detection sensor 92, hence even in case the leakage of the sealing liquid is increased, it can be discharged, and the durability of the submersible pump 6 can be enhanced even more, and the submersible pump 6 can be used for even longer period of time without a maintenance. Also, in case the leakage of the sealing liquid is little, the air amount blown by the blower 90 can be made less, thus the consumed energy can be suppressed to minimum, thus an efficient submersible pump 6 can be attained.

Note that, for the submersible pump 6 of the sixth embodiment, the shaft seal device according to the present invention has a constitution comprising the mechanical seal 30, the evaporation chamber 40, the air inlet system 70, the air inlet pipe 76, the air outlet system 80, the air outlet pipe 86 and the blower 90 or so.

### Other embodiment

Note that, the present invention is not to be limited to the above discussed embodiments, and it can be variously modified within the scope of the present invention.

For example, all of the above mentioned embodiments were the example wherein the submersible pump was used by immersing the pump main body of the shaft seal device according to the present invention in the water, but the shaft seal device according to the present invention is not limited thereto. For example, it may be used as the power generating device comprising a rotary machine in place of the motor as the power generator, and generating the power as the impeller rotates by the water flow or so.

Also, the mechanical seal comprised by the shaft seal device in the aforementioned embodiment was single type mechanical seal, but it may be a double type mechanical seal. The single type mechanical seal is effective for making the device compact as mentioned in above, but in case there is no need to make the device compact, or in case of further improving the durability and improving the time of continuous use of the shaft seal device or the submersible pump by decreasing the amount of leakage of the liquid from the mechanical seal, then the double seal type mechanical seal may be effective to use.

Also, for the submersible pump 6 explained in the sixth embodiment, the blower 90 was provided to other end (the atmosphere side end part) of the air outlet pipe 86. However, the blower 90 may be provided to other end (the atmosphere side end part) of the air inlet pipe 76.

Furthermore, the specific constitution of the mechanical seal, or the material of each constituting parts may be arbitrarily changed accordingly. For example, the mechanical seal of the aforementioned embodiment was an inside type mechanical seal, but it may be constituted as an outside type mechanical seal.

### NUMERICAL REFERENCES

- 1∼6: Submersible pump
- 10: Housing
- 10a: First housing member
- 10b: Second housing member
- 10c: Hole
- 11: O ring
- 12: Motor (Rotary machine)
- 14: Bearing
- 15: Rotary shaft
- 19: Cable
- 30: Mechanical seal
- 31: Rotary sealing ring
- 31s: Rotary side sliding face
- 32: Stationary sealing ring
- 32s: Stationary side sliding face
- 33: Cup gasket
- 34: Bellows
- 34a: Cylinder part
- 34b: Bellow part
- 35: Fastening ring
- 37: Spring
- 38: Metal bracket
- 39: Collar
- 40: Evaporation chamber (hollow part)
- 41: Middle passage
- 42: Sub evaporation chamber
- 45: Liquid absorption material mounting groove
- 46: Step face
- 47: Stopper
- 48: Stretch ring
- 51: Internal impeller
- 61: Liquid absorption member
- 61a: Liquid absorption material inner face
- 61b: Liquid absorption material cut face
- 70: Air inlet system
- 71: Air inlet opening
- 72: Air inlet passage
- 75: Air inlet opening
- 76: Air inlet pipe
- 80: Air outlet system
- 81: Air outlet opening
- 82, 83: Air outlet passage
- 85: Air outlet port
- 86: Air outlet pipe
- 90: Blower
- 92: Leakage detection sensor
- A: Internal space (motor side internal space)
- W: Sealing liquid space (subaqueous space)

## Claims

1. A shaft seal device sealing between a sealing liquid space and an internal space inside a housing along a rotary shaft of a rotary machine provided inside said housing, wherein said shaft seal device comprises
a mechanical seal provided at one end of said rotary shaft,
an evaporation chamber formed at said internal space of said mechanical seal and capable of temporary retaining the sealing liquid leaked from said mechanical seal,
an air inlet opening formed at said evaporation chamber and connecting to outside air space, and
an air outlet opening formed at said evaporation chamber and connecting to outside air space, wherein
said evaporation chamber and a passage connecting to said outside air space from said air outlet opening are heated by a heat generated at said rotary machine and said mechanical seal.

2. The shaft seal device as set forth in claim 1 further comprising an internal impeller rotating integrally with said rotary shaft so to forcibly generate an air flow taken in from said air inlet opening and discharged from said air outlet opening through said evaporation chamber.

3. The shaft seal device as set forth in claim 2, wherein said internal impeller is provided in said evaporation chamber.

4. The shaft seal device as set forth in claim 2, wherein said internal impeller is provided in a sub evaporation chamber connected to said evaporation chamber via a middle passage in said housing.

5. The shaft seal device as set forth in any one of claims 1 to 4 further comprising a liquid absorption material placed between said mechanical seal and said air outlet opening, and absorbs said sealing liquid which have leaked.

6. The shaft seal device as set forth in any one of claims 1 to 5, wherein said air inlet opening is formed at said mechanical seal side than said air outlet opening in an axial direction of said rotary shaft, and said air outlet opening is formed at said rotary machine side than said air inlet opening in said axial direction.

7. The shaft seal device as set forth in any one of claims 1 to 6 further comprising an air inlet pipe having one end connected to said air inlet opening and other end provided at said outside air space, and an air outlet pipe having one end connected to said air outlet opening and other end provided at said outside air space, and
said air inlet opening and said air outlet opening are respectively connected to said outside air space via said air inlet pipe and said air outlet pipe.

8. The shaft seal device as set forth in claim 7 further comprising either one of a blower provided at said air inlet pipe to supply an outside air to said air inlet pipe, or a blower provided at said air outlet pipe to discharge an air from said air outlet pipe.

9. The shaft seal device as set forth in any one of claims 1 to 8, wherein said mechanical seal is a single type mechanical seal.

10. The shaft seal device as set forth in any one of claims 1 to 9 for a submersible pump wherein said one end of said rotary shaft is connected to a submerged impeller in a water, and said rotary shaft is held by a bearing in a rotatable manner, and
said evaporation chamber is formed between said bearing and said mechanical seal provided on said rotary shaft.

11. A submersible pump comprising a shaft seal device as set forth in claim 10.
